# EUROPEAN PATENT APPLICATION

(11) **EP 4 624 385 A1**
(43) Date of publication of application: **01.10.2025**
(21) Application number: 25166844.8
(22) Date of filing: 27.03.2025
(51) Int. Cl.: B65G 47/84, B65G 54/02

(54) **AIRFLOW ROUTING SYSTEM FOR NON-CIRCULAR ITEM TRANSPORT SYSTEM**

(30) Priority: 28.03.2024 US 202418620321
(71) Applicant: Pace Packaging LLC, Fairfield, New Jersey 07004 (US)
(72) Inventor: Demers, Maxime, Fairfield, NJ 07004 (US); Lebel, Alexandre, Fairfield, NJ 07004 (US)
(74) Representative: Marks & Clerk LLP

(57) **Abstract**

An item transport system includes a non-circular continuous transport path, a plurality of vacuum grip mechanisms movable around the transport path, and an air path system for providing an air path to each of the vacuum grim mechanisms enabling controlled application of vacuum to each of the vacuum grip mechanisms. The air path system includes: a rotatable hub member having a plurality of hub air paths therethrough, each hub air path including an opening, wherein the transport path extends around a rotation axis of the rotatable hub member; a plurality of flexible tubes, each flexible tube extending from one of the openings of the rotatable hub member and connected to enable control of one of the vacuum grip mechanisms; wherein each flexible tube includes a first end that rotates with the rotatable hub member and a second end that moves with the vacuum grip mechanism.

## Description

### TECHNICAL FIELD

This application relates generally to item transport systems used in the packaging field and, more specifically, to an airflow routing system for a vacuum grip item transport system.

### BACKGROUND

In the packaging industry, item transport using vacuum grip mechanism is known. In some implementations, such as bottle unscramblers, one type of vacuum grip conveyor utilizes a series of vacuum grip heads that are moved about a non-circular continuous path from an item pick up location (e.g., where a robotic mechanism places the item onto a vacuum grip head) and an item drop location (e.g., where the vacuum grip head releases its hold of the item to place the item in an upright orientation on a moving conveyor that leads to a next step in the item handling process). In such systems, reliable and effective control of the vacuum grip heads is critical and, because the vacuum grip heads are moving, providing a reliable fluid path connection can be difficult.

Accordingly, it would be desirable to provide a non-circular item transport system with a reliable airflow routing system.

### SUMMARY

In one aspect, an item transport system includes a non-circular continuous transport path, a plurality of vacuum grip mechanisms mounted for movement around the non-circular continuous transport path, and an air path system for providing an air path to each of the vacuum grim mechanisms enabling controlled application of vacuum to each of the vacuum grip mechanisms. The air path system includes: a rotatable hub member having a plurality of hub air paths therethrough, each hub air path including an opening, wherein the non-circular continuous transport path extends around a rotation axis of the rotatable hub member; a plurality of flexible tubes, each flexible tube extending from one of the openings of the rotatable hub member and connected to enable control of one of the vacuum grip mechanisms; wherein each flexible tube includes a first end that rotates with the rotatable hub member and a second end that moves with the vacuum grip mechanism.

In another aspect, an item transport system includes a non-circular continuous transport path, a plurality of vacuum grip mechanisms mounted for movement around the non-circular continuous transport path, and an air path system for providing an air path to each of the vacuum grim mechanisms enabling controlled application of vacuum to each of the vacuum grip mechanisms. The air path system includes: a rotatable hub member having a plurality of hub air paths therethrough, each hub air path including an opening, wherein the non-circular continuous transport path extends around a rotation axis of the rotatable hub member; a plurality of flexible tubes, each flexible tube extending from one of the openings of the rotatable hub member and connected to enable control of one of the vacuum grip mechanisms; wherein a length of each flexible tube varies during operation of item transport system in which the rotatable hub member rotates and the vacuum grip mechanisms move about the non-circular continuous transport path.

The details of one or more embodiments are set forth in the accompanying drawings and the description below. Other features, objects, and advantages will be apparent from the description and drawings, and from the claims.

### BRIEF DESCRIPTION OF THE DRAWINGS

Figs. 1 and 2 are perspective views of an item transport system;
Fig. 3 is a cross-section of the item transport system;
Figs. 4-6 are perspective views with portions of the item transport system sequentially removed from the outside in;
Fig. 7 is a perspective rear view of the item transport system;
Fig. 8 is a partial perspective of a hub drive system;
Fig. 9 is a perspective view of portions of the system;
Fig. 10 is a cross-section showing portions of the system;
Fig. 11 is a perspective view of portions of the hub drive system;
Fig. 12 is a perspective view of flexible tube connection to grip mechanism through the belt;
Fig. 13 is a perspective view corresponding to Fig. 12, with component hidden to show the path through the belt;
Fig. 14 is a perspective view of an arrangement including a pair of item transport systems;
Fig. 15 shows an alternative item transport system employing a running rail;
Fig. 16 shows a partial schematic of an embodiment in which air is drawn through the flexible tubes and the hub member; and
Fig. 17 shows a partial schematic of an embodiment in which air is pushed through the hub member and the flexible tubes toward the grip mechanisms.

### DETAILED DESCRIPTION

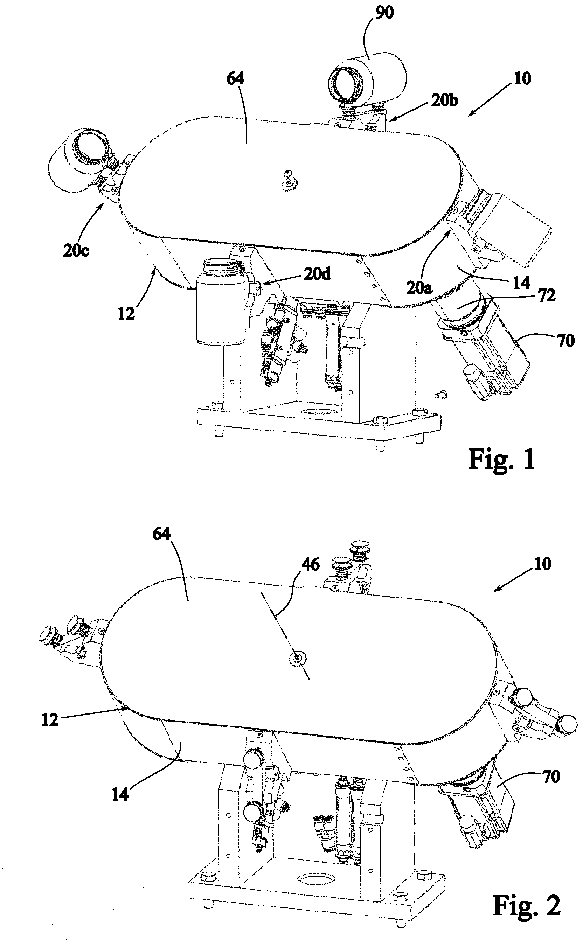

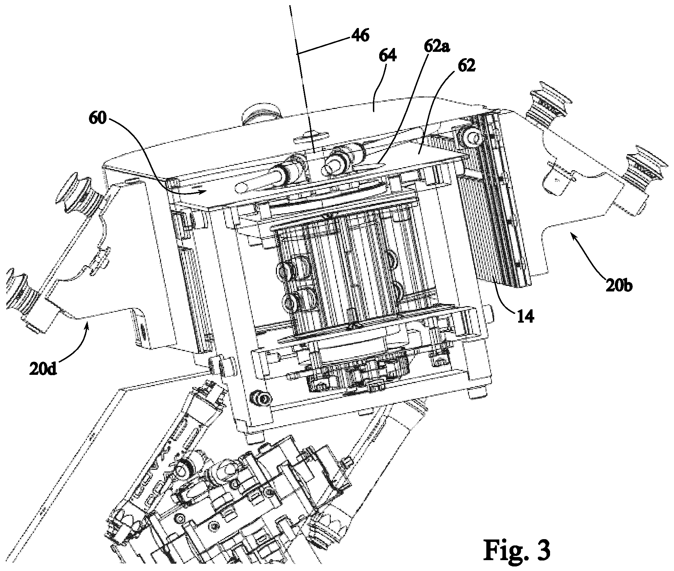

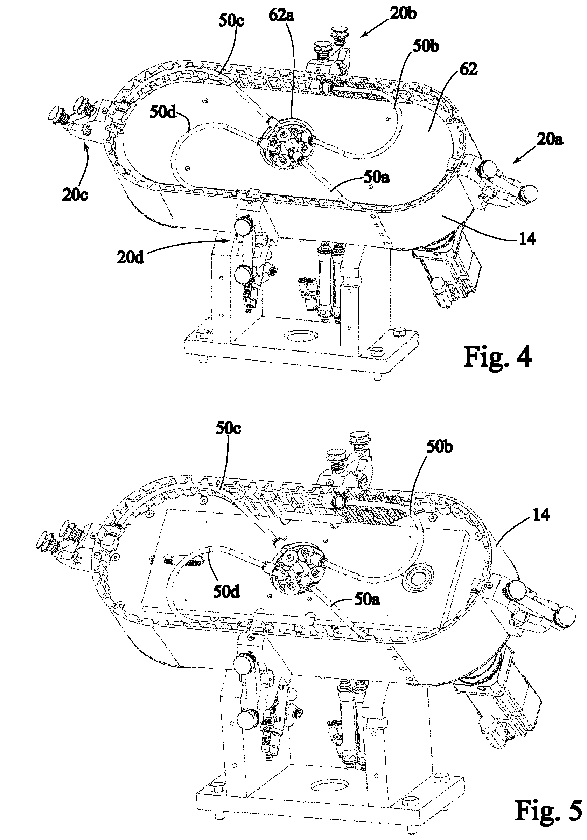

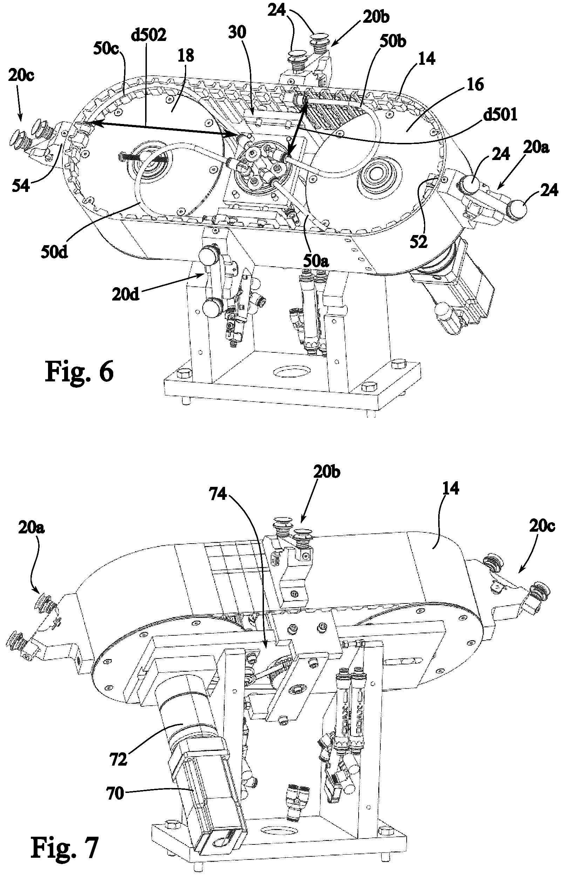

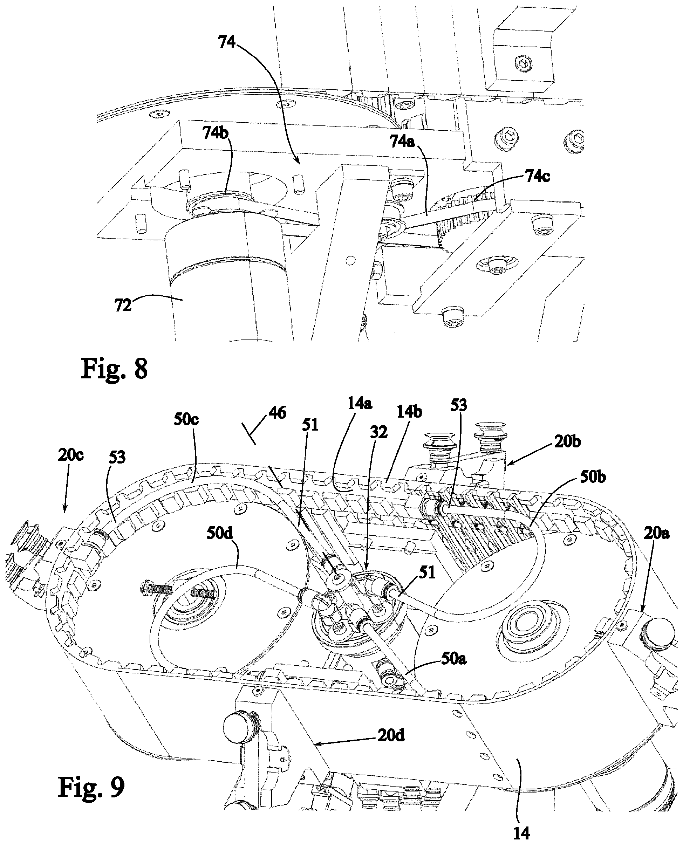

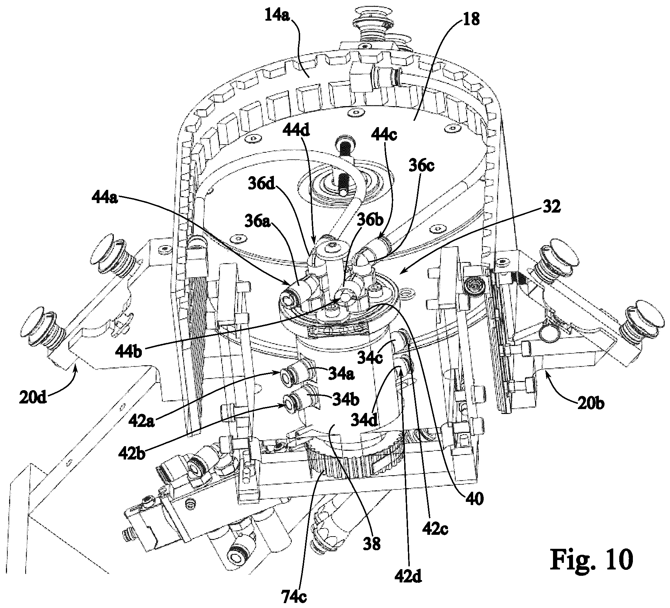

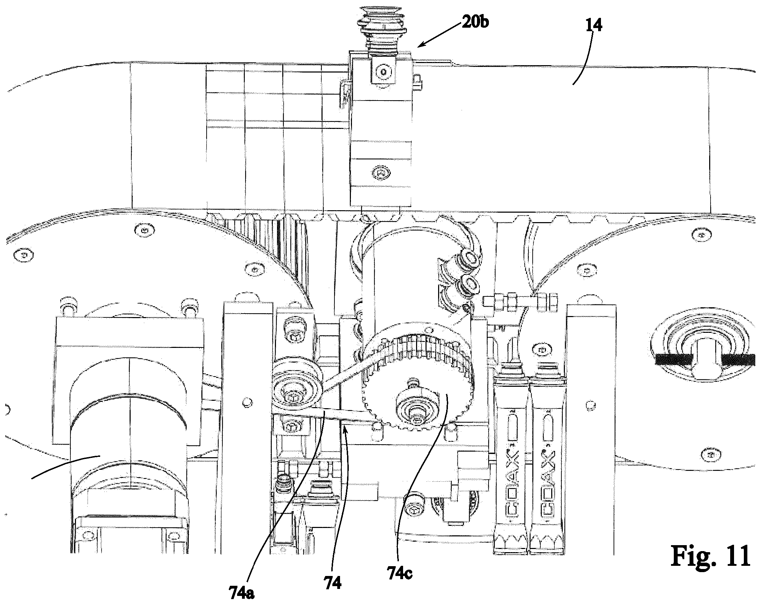

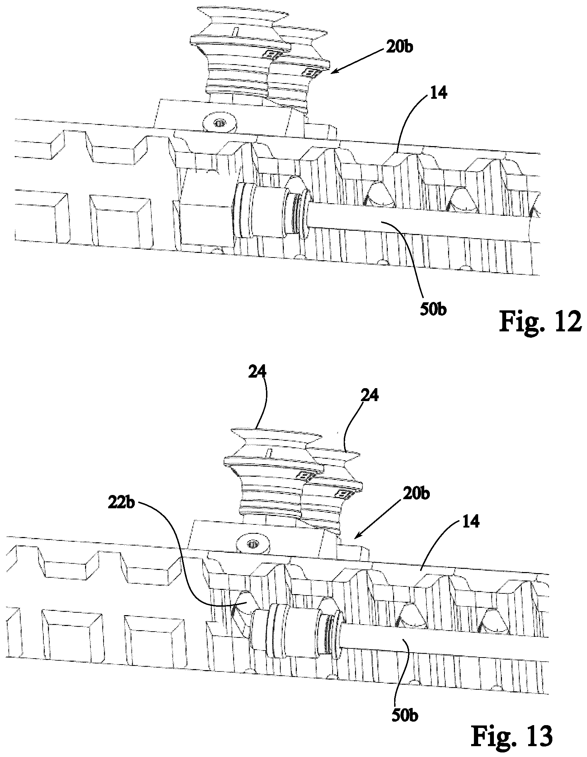

Referring to Figs. 1-13, an item transport system 10 includes a non-circular continuous transport path 12, which here is formed by a belt 14 that extends around a drive wheel 16 and an idler wheel 18. A plurality of vacuum grip mechanisms 20a-20d (e.g., in the form of grip heads) each having an associated pair of grip discs or cups 24. Each grip mechanism 20a-20d is mounted to the belt 14 for movement around the transport path 12 with the belt 14, and each grip mechanism 20a-20d extends outwardly from the outer surface of the belt 14. At an internal side of the belt 14, each vacuum grip mechanism 20a-20d includes a vacuum path opening (e.g., 22b, here through the belt) that is fluidly connected to the grip discs or cups 24.

An air path system 30 provides an air path to each of the vacuum grip mechanisms 20a-20d, enabling controlled application of vacuum to each of the vacuum grip mechanisms. The air path system includes a hub member 32 having a plurality of hub air paths therethrough, each of which runs from a hub air path opening 34a-34d to a hub air path opening 36a-36d. The hub member 32 includes a stationary outer cylindrical part 38 on which the hub air path openings 34a-34d are located, and a rotatable part 40 disposed within the stationary part 38 for rotation relative to the stationary part 38. Here, each hub air path opening 34a-34b is formed by a connector 42a-42d to which a controllable vacuum source is fluidly connectable. Each hub air opening 36a-36d is formed by a connector 44a-44d that is fluidly connectable to control a respective one of the vacuum grip mechanisms 20a-20d. Notably, the transport path 12 extends around a rotation axis 46 of the rotatable part 40 of the hub member.

A plurality of flexible tubes 50a-50d are provided. Each flexible tube is connected between one of the moving openings 36a-36d of the rotatable part of the hub member and one of the vacuum grip mechanisms 20a-20d or a control component, such as a venturi, associated with each vacuum grip mechanism. Each flexible tube 50a-50d includes an end 51 that rotates with the rotatable part of the hub member and an end 53 that moves with the vacuum grip mechanism 20a-20d to which the flexible tube leads. Notably, during operation of the item transport mechanism, for each flexible tube 50a-50d, a linear distance between the ends 51 and 53 of the flexible tube varies. This is seen by the difference between linear distance d501 and d502. To account for this distance change during operation, a shape of a path followed by each flexible tube also varies, as can be seen by the relative shapes of tubes 50a and 50b. The flexible nature of the tubes enables these changes as needed. In implementations, for each flexible tube 50a-50d, the linear distance between the ends of the tube has a maximum value (e.g., when the vacuum gripper mechanism associated with the tube is at the far right location 52 or far left location 54 of the looped path 12) and an actual full length of the flexible tube (i.e., length of the flexible tube when straightened to its longest possible length) is at least 1.20 times greater than the maximum value (e.g., such as at least 1.3 times greater than the maximum value).

Here, a capture space 60 for the flexible tubes is provided, in which the flexible tubes move during operation of the item transport system. The capture space 60 defined between an inner plate 62 below the flexible tubes 50a-50d and an outer plate 64 above the flexible tubes, such that a depth of the capture space 60 runs substantially parallel with the axis 46. This capture space helps assure that the flexible tubes 50a-50d maintain a substantially consistent depthwise orientation along the axis 46. The tubes 50a-50d are also kept in place by a groove 14a cut or otherwise formed in the belt teeth 14b. A portion of each tube naturally seats, under the bias of the flexing tube, in the groove 14a as the system moves. The length of the tube portion seated in the groove will vary about the path during belt movement. The inner plate 62 includes an opening 62a aligned with the hub member and through which the tubes 50a-50d or the connectors 44a-44d of the rotating part of the hub extend. The capture space 60 is bounded at an external peripheral side by the transport path 12 and extends into the groove 14a.

Per above, here, each vacuum grip mechanism 20 is connected to a part of the belt 14 for movement therewith. A drive motor 70 is connected via gearing 72 to rotate a drive shaft of the drive wheel 16. A linked connection 74 is provided between the drive wheel 16 and the rotating part of the hub member, such that rotation of the rotating part of the hub member is synchronized with movement of the belt (e.g., that the hub member makes a single 360° rotation for each complete movement of the belt 14 around the belt path). Here, the linked connection 74 is provided by a drive belt or chain 74a that extends from an output gear or pulley 74b of the drive wheel drive to a gear or drive wheel 74c of the rotatable part of the hub member. The relative sizing of the gears/wheels 74b and 74c provides the necessary adjustment to achieve the desired rotation speed of the rotatable part of the hub member.

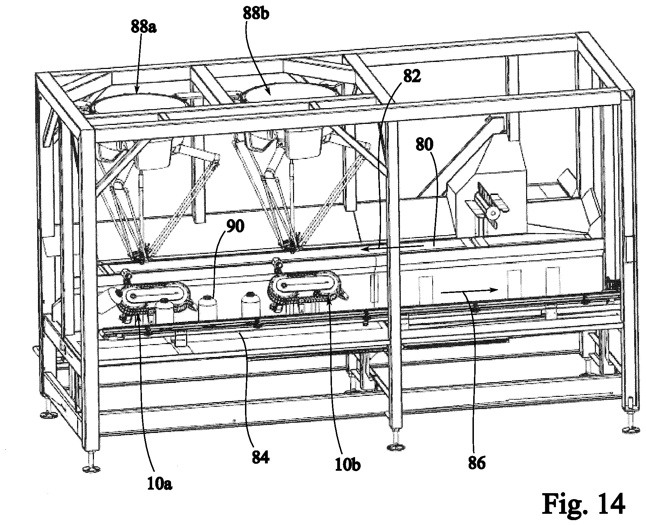

In one implementation, per Figs. 14, a pair of item transport systems 10a and 10b are arranged between an item input conveyor 80 that moves in direction 82 and an item output conveyor 84 that travels in direction 86. Each item transport system includes an associated robotic pick and place mechanism 88a and 88b. Items 90, such as bottles or other containers, enter the system via conveyor 80 in random orientations (e.g., laying on their sides in random directions). The pick and place mechanisms 88a and 88b selectively pick the items 90 from the conveyor 80 and places each picked item onto one of the vacuum grip mechanisms of its associated item transport system 10a and 10b, which in turn reorients and transfers the item 90 onto the conveyor 84 in an upright manner. In one operating mode of the system, pick and place mechanism 88a places items 90 on the conveyor 80 with a space therebetween, and pick and place mechanism 88b places items in the spaces between the items place by pick and place mechanism 88a. This arrangement and mode of operation facilitates higher speed processing than a system including only a single pick and place mechanism and single item transport system.

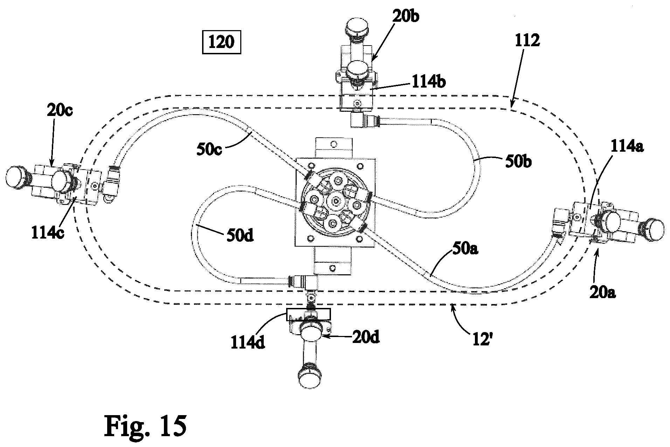

Although the above, described embodiment contemplates a conveyor belt type arrangement, other configurations are possible. In one example, a chain or other flexible element could be used in place of the belt. In another example, referring to Fig. 15, the transport path 12' is formed by a running rail 112 having a plurality of coils arranged in and sequentially along the running rail, and each vacuum grip mechanism 20a-20d is connected to a corresponding conveying element 114a-114d that is mounted for movement along the running rail 112 under control of the energization of the coils. Permanent magnets are arranged on the conveying elements 114a-114d for this purpose. The conveying elements 114a-114d can, therefore, be driven independently of each other by selective control/energization of the rail coils. In this case, an electromagnetic moving field is generated by the motor coils, and the conveying elements 1114a-114d follow the moving fields by means of magnetic coupling and consequently are moved along the running rail 112. The system includes an associated power supply unit for providing current for coil energization. A control system includes a controller 120 (e.g., processor based with associated programming) connected with the rail, the rail coils, and associated circuitry on the rail, for selective control of the energization level of individual coils, as well as components for monitoring the individual position and velocity of each of the conveying elements 114a-114d. One example of such a transport system is the Beckhoff XTS^{®} linear transport system. In the system of Fig. 15, the rotating part of the hub member 32 is driven by a motor that does not move the mechanisms 20a-20d, the appropriate speed of the motor is established by the controller 120 based upon known movement of the vacuum grip mechanisms.

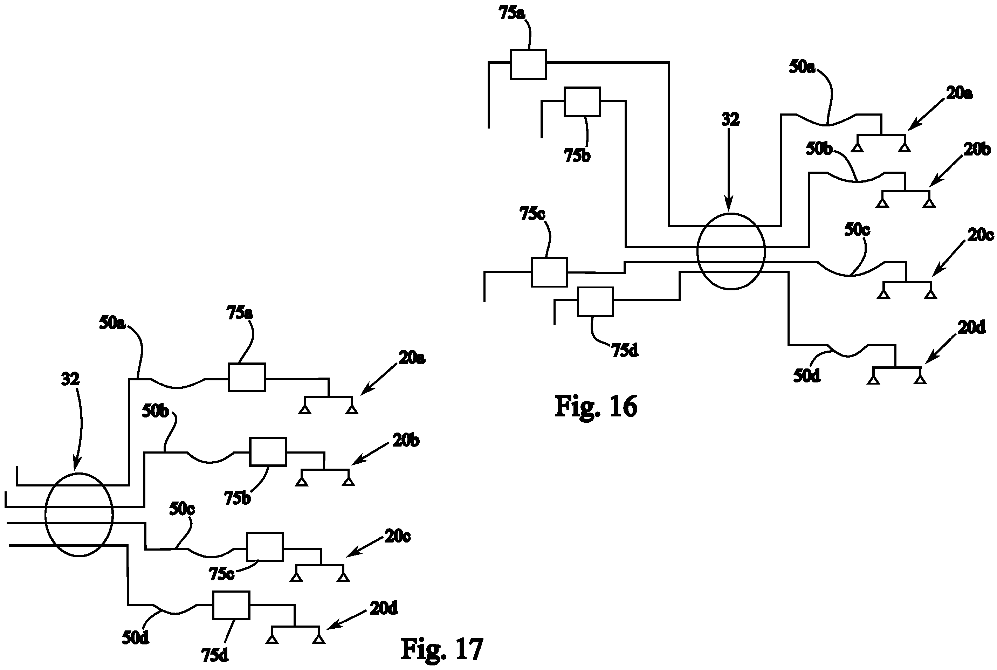

In the case of either of the embodiments, the system can be set up to either draw air through the flexible tubes 50a-50d and the hub member 32 (e.g., per the partial schematic of Fig. 16, where a vacuum device 75a-75d, such as a venturi, for each grip mechanism 20a-20d is located on the stationary side of the hub member 32 such that air moves from the rotating hub part to the stationary hub part) or to push air through the flexible tubes 50a-50d and the hub member (e.g., per the partial schematic of Fig. 17, where a pressure device at the stationary side of the hub member causes pressurized air to move from the stationary hub part to the rotating hub part, which can be used to trigger a vacuum device 75a-75d, such as a venturi, associated with each grip mechanism 20a-20d).

It is to be clearly understood that the above description is intended by way of illustration and example only, is not intended to be taken by way of limitation, and that other changes and modifications are possible.

## Claims

1. An item transport system, comprising:
a non-circular continuous transport path;
a plurality of vacuum grip mechanisms mounted for movement around the non-circular continuous transport path;
an air path system for providing an air path to each of the vacuum grim mechanisms enabling controlled application of vacuum to each of the vacuum grip mechanisms, wherein the air path system comprises:
a rotatable hub member having a plurality of hub air paths therethrough, each hub air path including an opening, wherein the non-circular continuous transport path extends around a rotation axis of the rotatable hub member;
a plurality of flexible tubes, each flexible tube extending from one of the openings of the rotatable hub member and connected to enable control of one of the vacuum grip mechanisms;
wherein each flexible tube includes a first end that rotates with the rotatable hub member and a second end that moves with the vacuum grip mechanism.

2. The item transport system of claim 1, wherein, for each flexible tube, a linear distance between the first end and the second end of the flexible tube varies during operation of the item transport mechanism and a shape of a path followed by the flexible tube also varies.

3. The item transport system of claim 1 or 2, wherein, for each flexible tube, the linear distance has a maximum value, and an actual length of the flexible tube is at least 1.2 times greater than the maximum value.

4. The item transport system of any preceding claim, further comprising:
a capture space, in which the flexible tubes move, the capture spaced defined between an inner plate below the flexible tubes and an outer plate above the flexible tubes.

5. The item transport system of claim 4, wherein the inner plate includes an opening aligned with the hub member.

6. The item transport system of claim 4 or 5, wherein the capture space is bounded at an external side by the non-circular continuous transport path.

7. The item transport system of any preceding claim, wherein the non-circular continuous transport path comprises a path along which a belt or chain or other flexible element travels, wherein each vacuum grip mechanism is connected to a part of the belt or chain or other flexible element for movement therewith.

8. The item transport system of claim 7, wherein the belt or chain or other flexible element traverses about a drive wheel and a further wheel, wherein a linked connection is provided between the drive wheel and the hub member such that rotation of the hub member is synchronized with movement of the belt or chain or other flexible element such that the hub member makes a single rotation for each complete movement of the belt or chain or other flexible element around the path.

9. The item transport system of any preceding claim, wherein the non-circular continuous transport path comprises a path about which a flexible element moves, the flexible element including an inwardly facing groove into which a portion of each flexible tube seats at least temporarily during operation of the item transport system.

10. The item transport system of any preceding claim, wherein the non-circular continuous transport path comprises a running rail comprising a plurality of coils which are arranged in and sequentially along the running rail, wherein each vacuum grip mechanism is connected to a corresponding conveying element that is mounted for movement along the running rail under control of energization of the coils.

11. The item transport system of any preceding claim, wherein:
air is moved through the flexible tubes to the rotatable hub member for drawing air through the vacuum grip mechanisms;
or
air is moved from the rotatable hub member through the flexible tubes for activating a venturi device associated with each vacuum grip mechanism.

12. An item transport system, comprising:
a non-circular continuous transport path;
a plurality of vacuum grip mechanisms mounted for movement around the non-circular continuous transport path;
an air path system for providing an air path to each of the vacuum grim mechanisms enabling controlled application of vacuum to each of the vacuum grip mechanisms, wherein the air path system comprises:
a rotatable hub member having a plurality of hub air paths therethrough, each hub air path including an opening, wherein the non-circular continuous transport path extends around a rotation axis of the rotatable hub member;
a plurality of flexible tubes, each flexible tube extending from one of the openings of the rotatable hub member and connected to enable control of one of the vacuum grip mechanisms;
wherein a length of each flexible tube varies during operation of item transport system in which the rotatable hub member rotates and the vacuum grip mechanisms move about the non-circular continuous transport path.

13. The item transport system of claim 12, wherein the non-circular continuous transport path comprises a belt having an inward side facing toward the rotation axis, wherein the inward side includes a plurality of teeth, wherein each tooth includes a groove or recess therein such that portions of the flexible tubes can at least seat therein during operation of the item transport system.

14. The item transport system of claim 12 or 13, wherein:
air is moved through the flexible tubes to the rotatable hub member for drawing air through the vacuum grip mechanisms;
or
air is moved from the rotatable hub member through the flexible tubes for activating a venturi device associated with each vacuum grip mechanism.
